# EUROPEAN PATENT APPLICATION

(11) **EP 2 105 919 A1**
(43) Date of publication of application: **30.09.2009**
(21) Application number: 08168361.7
(22) Date of filing: 05.11.2008
(51) Int. Cl.: G11B 5/66

(54) **Magnetic recording medium and magnetic recording device**

(30) Priority: 26.03.2008 JP 2008080737
(71) Applicant: Fujitsu Ltd., Kawasaki-shi, Kanagawa 211-8588 (JP)
(72) Inventor: Taguchi, Jun, Kawasaki-shi, Kanagawa 211-8588 (JP); Kurita, Ryo, Kawasaki-shi, Kanagawa 211-8588 (JP)
(74) Representative: Holtby, Christopher Lawrence

(57) **Abstract**

A disclosed magnetic recording medium includes a substrate; a soft magnetic backing layer disposed on the substrate; an intermediate layer disposed on the soft magnetic backing layer; a first recording layer disposed on the intermediate layer and having perpendicular magnetic anisotropy; an exchange-coupling-energy control layer disposed on the first recording layer and made of a granular material in which oxide is added to metal including ruthenium; and a second recording layer disposed on the exchange-coupling-energy control layer, having perpendicular magnetic anisotropy, and ferromagnetically coupled with the first recording layer via the exchange-coupling-energy control layer.

## Description

### FIELD

The disclosures herein are directed to a magnetic recording medium and a magnetic recording device.

### BACKGROUND

Along with the development of the information society, as for magnetic recording devices supporting the central role of information recording apparatuses, further improvement in the recording density is sought for magnetic recording media mounted on such magnetic recording devices. In the case of hard-disk drives (HDDs), for example, the recording density of hard disks improves 50% or more on an annual basis. In order to achieve such a high recording density, perpendicular magnetic recording media with the magnetization of the recording layer oriented perpendicular to an in-plane direction are considered advantageous compared to in-plane recording media with the magnetization oriented in the in-plane direction. In perpendicular magnetic recording media, the directions of magnetizations of adjacent bits in the recording layer are anti-parallel, which results in reinforcing the magnetizations. As a result, high recording density is more easily accomplished in perpendicular magnetic recording media.

Note that if the recording density is high, the area of a magnetic domain carrying one bit of magnetic information is reduced, and in turn the magnetization of the magnetic domain is reduced. As a result, "thermal fluctuation" effects become more prominent, in which the magnetization orientation is reversed in a random fashion by heat, thereby resulting in a loss of magnetic information. Using a material having high magnetic anisotropic energy is one way to prevent the thermal fluctuation effects; however, if the magnetic anisotropic energy is high, the recording magnetic field for writing magnetic recording information becomes strong, thereby reducing writability to the recording layer.

Thus, the resistance to thermal fluctuation of the recording layer and the writeability of the recording layer conflict with each other, and how to achieve a good balance between these two has been a key issue in the development of the perpendicular magnetic recording media.

In order to achieve this balance, a so-called ECC (Exchange Coupled Composite) magnetic recording medium is proposed in Patent Document 1. In the ECC magnetic recording medium, two recording layers are disposed one above the other in a manner that the axis of easy magnetization of one recording layer lies perpendicular to the substrate and that of the other recording layer lies in an in-plane direction, or that the axes of easy magnetization of the two recording layers obliquely intersect each other. A non-magnetic or highly saturated magnetic exchange-coupling-energy control layer (intermediate layer) is provided between the two recording layers to control the exchange coupling energy between the recording layers, thereby reducing the strength of the recording magnetic field. Patent Document 1 discloses a Ru (ruthenium) layer as a non-magnetic exchange-coupling-energy control layer and a Co (cobalt) layer as a highly saturated magnetic exchange-coupling-energy control layer. In particular, using Ru as a material for the exchange-coupling-energy control layer is preferable since it has good lattice matching with the recording layers.
Patent Document 1: Japanese Laid-open Patent Application Publication No. 2005-56555

However, if a non-magnetic exchange-coupling-energy control layer is made of only Ru and is thick, the exchange coupling energy between the upper and lower recording layers becomes small. Accordingly, although the magnetization of one recording layer reverses due to the recording magnetic field, the magnetization of the other recording layer does not reverse, and in such a case, it is required to increase the recording magnetic field strength in order to write magnetic information. Therefore, in the case of providing a non-magnetic exchange-coupling-energy control layer in an ECC magnetic recording medium, the exchange-coupling-energy control layer needs to be as thin as about 0.2 nm or less. However, it is very difficult to produce such an ultra-thin exchange-coupling-energy control layer, thus causing a problem in the mass production of the ECC magnetic recording medium.

### SUMMARY

According to an aspect of the present disclosures, a magnetic recording medium includes a substrate; a soft magnetic backing layer disposed on the substrate; an intermediate layer disposed on the soft magnetic backing layer; a first recording layer disposed on the intermediate layer and having perpendicular magnetic anisotropy; an exchange-coupling-energy control layer disposed on the first recording layer and made of a granular material in which oxide is added to metal including ruthenium; and a second recording layer disposed on the exchange-coupling-energy control layer, having perpendicular magnetic anisotropy, and ferromagnetically coupled with the first recording layer via the exchange-coupling-energy control layer.

According to another aspect of the present disclosures, a magnetic recording device includes a magnetic recording medium and a magnetic head opposing the magnetic recording medium. The magnetic recording medium includes a substrate; a soft magnetic backing layer disposed on the substrate; an intermediate layer disposed on the soft magnetic backing layer; a first recording layer disposed on the intermediate layer and having perpendicular magnetic anisotropy; an exchange-coupling-energy control layer disposed on the first recording layer and made of a granular material in which oxide is added to metal including ruthenium; and a second recording layer disposed on the exchange-coupling-energy control layer, having perpendicular magnetic anisotropy, and ferromagnetically coupled with the first recording layer via the exchange-coupling-energy control layer.

Additional features of the embodiment will be set forth in part in the description which follows, and in part will be apparent from the description, or may be learned by practice of the disclosures. The advantages of the disclosures will be realized and attained by means of the elements and combinations particularly pointed out in the appended claims.

It is to be understood that both the foregoing general description and the following detailed description are exemplary and explanatory only and are not restrictive of the disclosures, as claimed.

### BRIEF DESCRIPTION OF DRAWINGS

FIG. 1 is a schematic diagram of a magnetic recording medium of an embodiment of the present disclosures;
FIG. 2 shows the relationship between thickness of an exchange-coupling-energy control layer and strength of a reversed magnetic field;
FIG. 3 shows the relationship between the additive amount of SiO₂ to Ru and Ru-layer thickness margin; and
FIG. 4 is a plan view of a magnetic recording/playback device according to an embodiment of the present disclosure.

### DESCRIPTION OF EMBODIMENT

Embodiments that describe the best mode for carrying out the present disclosures are explained next with reference to the drawings.

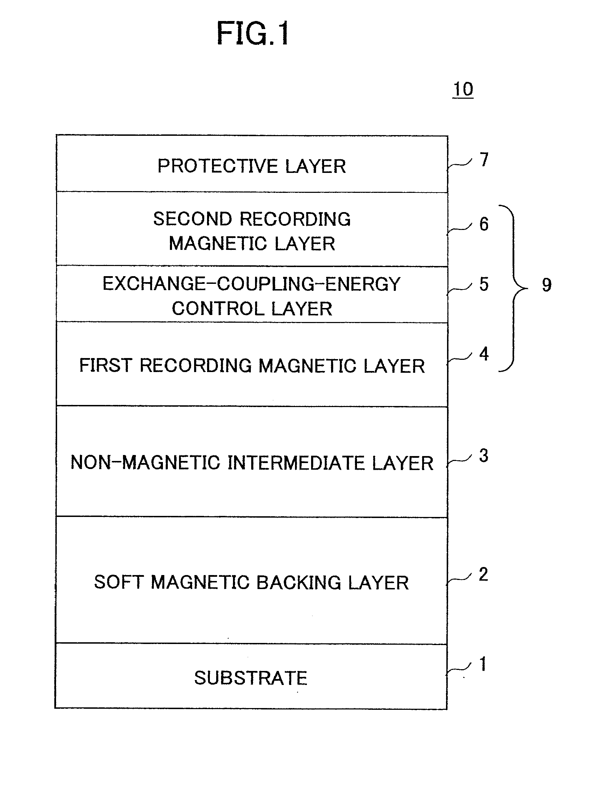

FIG. 1 is a schematic diagram showing a basic configuration of an ECC perpendicular magnetic recording medium 10 according to an embodiment of the present disclosures. As shown in FIG. 1, the ECC perpendicular magnetic recording medium 10 has a layered structure including a substrate 1 disposed at the bottom, a soft magnetic backing layer 2, a non-magnetic intermediate layer 3, a magnetic recording layer 9 and a protective layer 7.

The substrate 1 is a non-magnetic substrate made of a non-magnetic material, such as glass, aluminum, or silicon (Si). The soft magnetic backing layer 2 disposed on top of the substrate 1 is made of a FeCo alloy which has high permeability and an amorphous structure. The soft magnetic backing layer 2 may have a multi-layered structure including a non-magnetic layer-for example, a layered structure in which a FeCoB layer, a Ru layer and a FeCoB layer are disposed in the stated order.

The non-magnetic intermediate layer 3 is provided to improve crystallinity of the magnetic recording layer 9 by orienting the axis of easy magnetization of the magnetic recording layer 9 perpendicular to the in-plane direction of the ECC perpendicular magnetic recording medium 10. The non-magnetic intermediate layer 3 may be formed of a single layer or be multi-layered. In the present embodiment, ruthenium (Ru) having good lattice matching with the magnetic recording layer 9 is used for the non-magnetic intermediate layer 3. However, the non-magnetic intermediate layer 3 may, for example, have a layered structure including an amorphous Ta layer, a NiFeCr layer and a Ru layer, or a layered structure including a NiFeCr layer and a Ru layer.

The magnetic recording layer 9 has a structure in which a first recording magnetic layer 4 and a second recording magnetic layer 6 are coupled by an exchange-coupling-energy control layer 5. The first recording magnetic layer 4 has high magnetic anisotropy (high Hk). The high magnetic anisotropy is achieved by using a granular material of a SiO₂-added CoCrPt alloy with the composition amount of Pt being 20 at.% or more. The second recording magnetic layer 6 is a magnetic layer having lower magnetic anisotropy (low Hk) compared to the first recording magnetic layer 4. The magnetic anisotropy of the second recording magnetic layer 6 is arranged to be lower than that of the first recording magnetic layer 4 by using a granular material of a SiO₂-added CoCrPt alloy with the composition amount of Pt being 15 at.% or more.

Note that, in the present embodiment, the magnetic recording layer 9 has a structure in which the first recording magnetic layer 4 is disposed as the lower layer, and the second recording magnetic layer 6 is stacked on top of the first recording magnetic layer 4 with the exchange-coupling-energy control layer 5 interposed between them; however, the magnetic recording layer 9 may have a structure in which a lower Hk recording magnetic layer is disposed as the lower layer, and a higher Hk recording magnetic layer is stacked on top of the low Hk recording magnetic layer with the exchange-coupling-energy control layer 5 interposed between them.

The exchange-coupling-energy control layer 5 is required to achieve a favorable ECC structure. The present embodiment is **characterized in that** the exchange-coupling-energy control layer 5 is made of a granular material which is created by adding 6 at.% SiO₂ to ruthenium (Ru). As for the protective layer 7, a DLC (Diamond Like Carbon) layer, for example, may be used. A lubricant agent may be applied on top of the protective layer.

Next is described a manufacturing procedure for the magnetic recording medium 10 according to the present embodiment.

To manufacture the magnetic recording medium 10, first, a CoNbZr layer having a thickness of 50 to 100 nm, preferably 50 nm, is formed on the non-magnetic substrate 1, such as a glass substrate, as the soft magnetic backing layer 2 by sputtering. In the sputtering, the temperature of the substrate is maintained at room temperature, and Ar gas is used as a process gas (sputtering gas). The film-forming pressure is about 0.5 Pa.

Note that the substrate 1 is not limited to a glass substrate, and may be an Al alloy substrate, a silicon substrate having a thermally-oxidized film on the surface, or a plastic substrate. Furthermore, the soft magnetic backing layer 2 is not limited to a single layer structure, and may have a layered structure in which soft magnetic backing sub-layers are separated by a non-magnetic sub-layer (e.g. a Ru layer) interposed between them, and the separated soft magnetic backing sub-layers are antiferromagnetically coupled so as to prevent a leakage magnetic field, which leads to spike noise, from emanating outside the soft magnetic backing layer 2.

Next, as the non-magnetic intermediate layer 3, a Ru layer having a thickness of 20 to 30 nm is formed on the soft magnetic backing layer 2 by sputtering, in which Ar gas is used as a process gas and the film-forming pressure is 0.5 Pa. When the non-magnetic intermediate layer 3 is formed, the temperature of the substrate is maintained at room temperature.

Then, as the first recording magnetic layer 4, a CoCrPt·SiO₂ layer having a granular structure in which CoCrPt particles are dispersed in silicon dioxide (SiO₂) is formed in a thickness of about 10 nm by sputtering. The composition amount of Pt is 20 at.% or more, as described above, whereby the first recording magnetic layer 4 is made to have high Hk. Conditions for forming the first recording magnetic layer 4 are not particularly limited; however, in the present embodiment, Ar gas is used as a process gas and the film-forming pressure is 0.5 Pa.

The non-magnetic intermediate layer 3 made of Ru below the first recording magnetic layer 4 has a hcp (hexagonal close-packed) crystal structure, which functions to align the orientation of the CoCrPt particles in the first recording magnetic layer 4 perpendicular to the in-plane direction. As a result, the CoCrPt particles have a hcp crystal structure, which extends to the perpendicular direction as in the non-magnetic intermediate layer 3. The axis of easy magnetization lies in the height direction of hexagonal pillars of the hcp structure, and the first recording magnetic layer 4 exhibits perpendicular magnetic anisotropy.

Note that the first recording magnetic layer 4 is not limited to a granular structure, provided that it exhibits perpendicular magnetic anisotropy. For example, a CoCr-based alloy layer having perpendicular magnetic anisotropy may be used as the first recording magnetic layer 4.

Next, as the exchange-coupling-energy control layer 5, a Ru·SiO₂ layer having a granular structure in which Ru particles are dispersed in silicon dioxide (SiO₂) is formed in a thickness of 0.3 to 0.5 nm by sputtering. In the present embodiment, since the exchange-coupling-energy control layer 5 is formed thick, the film-forming efficiency of the exchange-coupling-energy control layer 5 can be improved, thereby improving the mass production of the perpendicular magnetic recording medium 10.

After the exchange-coupling-energy control layer 5 is formed, as described above, the second recording magnetic layer 6 is formed on top of the exchange-coupling-energy control layer 5. Specifically, as the second recording magnetic layer 6, a CoCrPt layer is formed in a thickness of about 6 nm on the exchange-coupling-energy control layer 5 by sputtering, in which Ar gas is used as a process gas and the film-forming pressure is 0.5 Pa. The composition amount of Pt is 15 at.% or more, as described above, whereby the second recording magnetic layer 6 is made to have magnetic anisotropy lower than that of the first recording magnetic layer 4.

The second recording magnetic layer 6 exhibits perpendicular magnetic anisotropy like the first recording magnetic layer 4. The first and the second recording layers 4 and 6 are ferromagnetically coupled with each other with the exchange-coupling-energy control layer 5 interposed between them. The exchange coupling energy between the recording layers 4 and 6 is controlled by the exchange-coupling-energy control layer 5. Note that the manufacturing procedure of the first and the second recording magnetic layers 4 and 6 is not limited to that described above in the present embodiment, and the first and the second recording magnetic layers 4 and 6 may be formed in the opposite order.

Next, as the protective layer 7, a DLC (Diamond Like Carbon) layer is formed in a thickness of about 4 nm on the second recording magnetic layer 6 by RF-CVD (Radio Frequency Chemical Vapor Deposition) using C₂H₂ gas as reaction gas. Then, a lubricant agent may be applied on top of the protective layer. In the above-described manner, the magnetic recording medium 10 according to the present embodiment is manufactured.

The perpendicular magnetic recording medium 10 of the present embodiment is characterized by adding oxides to ruthenium to create the exchange-coupling-energy control layer 5. The addition of oxides to ruthenium allows an increase of a Ru-layer thickness margin. The term "Ru-layer thickness margin" means the thickness of a Ru layer which allows the strength of the reversed magnetic field to be within a deviation of ±200 Oe from a target value. By adding oxides (silicon dioxide) to ruthenium, a granular structure which contains Ru in a matrix of oxides is obtained.

The exchange-coupling-energy control layer 5 controls the exchange coupling energy by causing an interaction called the RKKY (Ruderman-Kittel-Kasuya-Yosida) interaction between the upper and lower magnetic layers. This interaction is reduced in the case where the exchange-coupling-energy control layer 5 is formed in the granular structure. Accordingly, in order to enhance the reduced interaction, it is considered to be possible to increase the thickness of the exchange-coupling-energy control layer 5.

If the exchange-coupling-energy control layer 5 is formed in the granular structure, a magnetic layer (the second recording magnetic layer 6 in the present embodiment) disposed on the exchange-coupling-energy control layer 5 grows following the structure of the exchange-coupling-energy control layer 5. Herewith, the second recording magnetic layer 6 has, or approximates, the granular structure. In the case where the second recording magnetic layer 6 is originally made of a material to form the granular structure, the formation of the granular structure is further facilitated. As a result, the division of the magnetic couplings in the second recording magnetic layer 6 in the in-plane direction is facilitated, thereby improving the recording resolution of the second recording magnetic layer 6.

In the present embodiment, a material created by adding oxides to ruthenium is used; however, the same effect can be expected by using an alloy including an adequate amount of Ru, which allows the alloy to have good lattice matching with the first and the second recording magnetic layers 4 and 6.

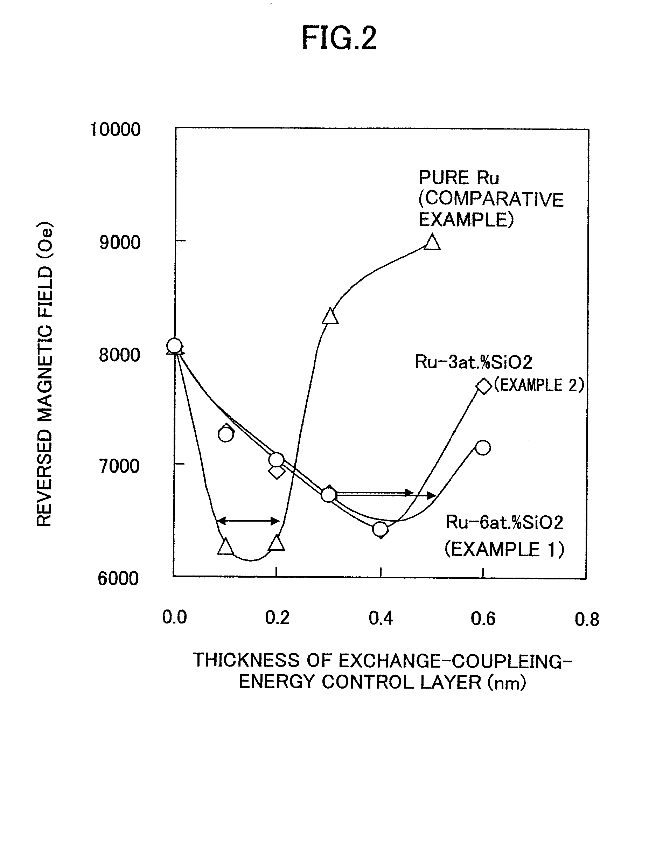

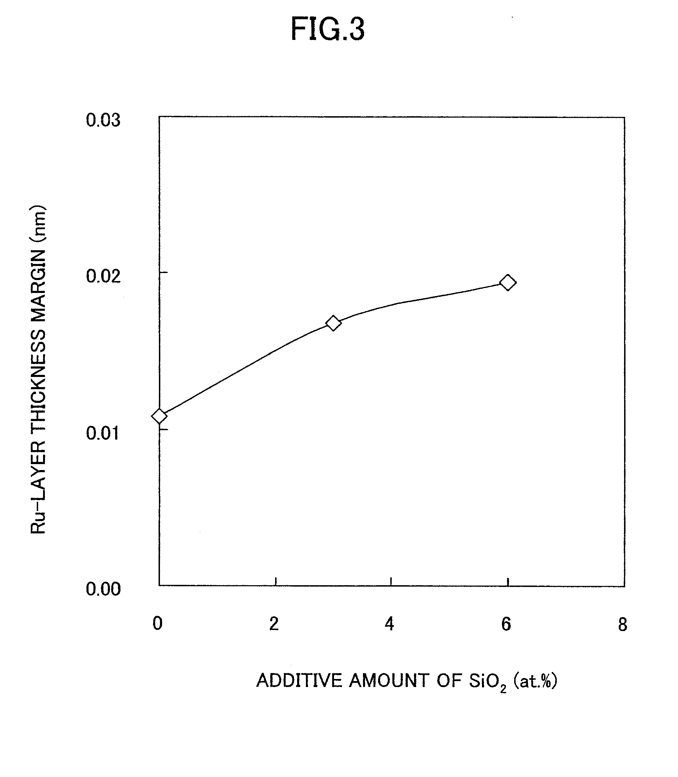

Next are described, with reference to FIGs. 2 and 3, advantageous effects obtained by the perpendicular magnetic recording medium 10 manufactured in the above-described manner.

FIG. 2 shows an effect in reducing the strength of the reversed magnetic field, observed when the thickness of the exchange-coupling-energy control layer 5 is changed in the range of 0 to 0.6 nm. In FIG. 2, the vertical axis is the strength of the reversed magnetic field, and the horizontal axis is the thickness of the exchange-coupling-energy control layer 5.

Example 1 in FIG. 2 is the perpendicular magnetic recording medium 10 manufactured by the above-described manufacturing procedure. Example 2 is a recording medium having the same structure as Example 1 and made of the same materials as those of Example 1, but differs in that the exchange-coupling-energy control layer 5 is made of a granular material created by adding 3 at.% SiO₂ to Ru. Comparative Example is a recording medium having the same structure as Example 1 and made of the same materials as those of Example 1, but differs in that the exchange-coupling-energy control layer 5 is made of only Ru (pure Ru). FIG. 2 illustrates Example 1, Example 2 and Comparative Example all together in a single graph.

According to FIG. 2, as for Comparative Example, an optimum thickness of the exchange-coupling-energy control layer 5 for reducing the strength of the reversed magnetic field is about 0.15 nm. However, as described above, such a small optimum thickness of the exchange-coupling-energy control layer 5 leads to a problem in the mass production of the perpendicular magnetic recording medium 10.

On the other hand, as for Example 1 and Example 2, an optimum thickness of the exchange-coupling-energy control layer 5 is about 0.40 nm, about 2.7 times larger than that of Comparative Example. Therefore, according to the perpendicular magnetic recording medium 10 of the present embodiment, it is possible to improve the mass production. In the case of Example 2 where 3 at.% SiO₂ is added to Ru, the effect of the changes in the layer thickness is substantially the same as in the case of Example 1. Accordingly, the exchange-coupling-energy control layer 5 whose layer thickness (0.4 nm) allows a high mass-production can be achieved by adding the amount of SiO₂ at least in the range of 3 to 6 at.%.

FIG. 3 shows the Ru-layer thickness margin in relation to the additive amount of SiO₂. According to FIG. 3, it can be seen that the Ru-layer thickness margin can be increased about 1.5 times to double by increasing the additive amount of SiO₂ from 0 at.% to the range of 3 to 6 at.%. Thus, according to the results illustrated in FIG. 3 also, it is proven that the present embodiment is able to improve the mass production of the perpendicular magnetic recording medium 10.

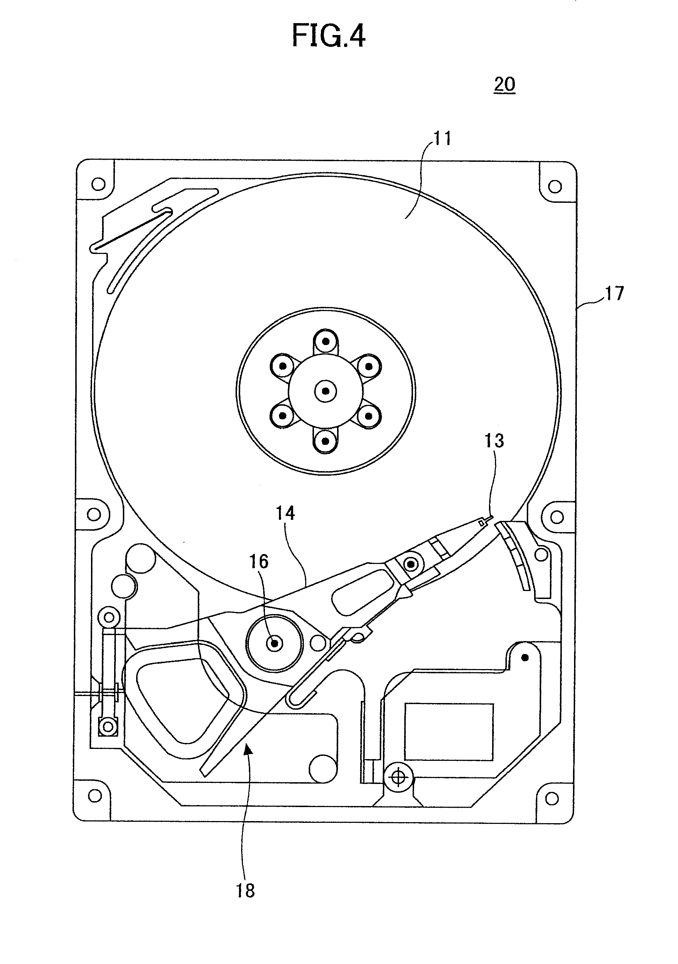

Next is described a magnetic recording/playback device 20 including the magnetic recording medium 10 of the present embodiment. FIG. 4 is a plan view of the magnetic recording/playback device 20. The magnetic recording/playback device 20 is a hard disk device that is installed in a personal computer or a TV recording device.

In the magnetic recording/playback device 20, a magnetic recording medium 11 is housed, as a hard disk, in a case 17 rotatably by a spindle motor or the like. In the case 17, a carriage arm 14 is provided rotatably by a VCM (voice coil motor) 18 around an axis 16. A magnetic head 13 is provided at the tip of the carriage arm 14, and writing and reading of magnetic information to/from the magnetic recording medium 11 take place as the magnetic head 13 scans the surface of the magnetic recording medium 11.

The type of the magnetic head 13 is not particularly limited, and the magnetic head 13 may be formed by a magnetoresistive element, such as a GMR (Giant Magneto-Resistive) element or a TuMR (Tunneling Magneto-Resistive) element. The magnetic recording/playback device 20 is not limited to the above-mentioned hard-disk device, and may be a device for recording magnetic information on a flexible tape-like magnetic recording medium.

According to the present disclosures, a high exchange coupling energy of the recording layers can be retained even if the exchange-coupling-energy control layer is made thick, whereby it is possible to improve both characteristics and mass production of perpendicular magnetic recording media.

Thus, the present disclosures have been described herein with reference to preferred embodiments. While the present disclosures have been shown and described with particular examples, it should be understood that various changes and modifications may be made to the particular examples without departing from the scope of the broad spirit and scope of the present disclosures as defined in the claims.

All examples and conditional language used herein are intended for pedagogical purposes to aid the reader in understanding the principles of the disclosures and the concepts contributed by the inventor to furthering the art, and are to be construed as being without limitation to such specifically recited examples and conditions, nor does the organization of such examples in the specification relate to a showing of the superiority or inferiority of the disclosures. Although the embodiment of the present disclosures has been described in detail, it should be understood that various changes, substitutions, and alterations could be made hereto without departing from the spirit and scope of the disclosures.

## Claims

1. A magnetic recording medium comprising:
a substrate;
a soft magnetic backing layer disposed on the substrate;
an intermediate layer disposed on the soft magnetic backing layer;
a first recording layer disposed on the intermediate layer and having perpendicular magnetic anisotropy;
an exchange-coupling-energy control layer disposed on the first recording layer and made of a granular material in which oxide is added to metal including ruthenium; and
a second recording layer disposed on the exchange-coupling-energy control layer, having perpendicular magnetic anisotropy, and ferromagnetically coupled with the first recording layer via the exchange-coupling-energy control layer.

2. The magnetic recording medium as claimed in claim 1, wherein the oxide is silicon dioxide.

3. The magnetic recording medium as claimed in claim 2, wherein the silicon dioxide is added in a range of 3 to 6 at.%, inclusive.

4. The magnetic recording medium as claimed in any preceding claim, wherein thickness of the exchange-coupling-energy control layer is in a range of 0.3 to 0.5 nm, inclusive.

5. The magnetic recording medium as claimed in any preceding claim, wherein the granular material is made by addition of ruthenium to the oxide.

6. A magnetic recording device comprising:
a magnetic recording medium; and
a magnetic head opposing the magnetic recording medium,
wherein the magnetic recording medium includes a substrate; a soft magnetic backing layer disposed on the substrate; an intermediate layer disposed on the soft magnetic backing layer; a first recording layer disposed on the intermediate layer and having perpendicular magnetic anisotropy; an exchange-coupling-energy control layer disposed on the first recording layer and made of a granular material in which oxide is added to metal including ruthenium; and a second recording layer disposed on the exchange-coupling-energy control layer, having perpendicular magnetic anisotropy, and ferromagnetically coupled with the first recording layer via the exchange-coupling-energy control layer.
